# EUROPÄISCHE PATENTSCHRIFT

(11) **EP 1 557 554 B1**
(45) Veröffentlichungstag und Bekanntmachung des Hinweises auf die Patenterteilung: **15.10.2008**
(21) Anmeldenummer: 04106719.0
(22) Anmeldetag: 20.12.2004
(51) Int. Cl.: F02M 37/00, F02M 59/46

(54) **Vorrichtung zum Steuern eines Druckes in einer Kraftstoff-Vorlaufleitung**
Arrangement for controlling the pressure in a fuel feeding line
Dispositif de contrôle de la pression dans une ligne d'alimentation en carburant

(30) Priorität: 21.01.2004 DE 102004003113
(43) Veröffentlichungstag der Anmeldung: 27.07.2005
(73) Patentinhaber: Continental Automotive GmbH, 30165 Hannover (DE)
(72) Erfinder: Dickenscheid, Lothar, 55437, Ockenheim (DE); Herzog, Bernd, 65597, Huenfelden (DE)

(56) Entgegenhaltungen:
- EP-A- 0 698 733
- DE-A1- 19 618 707
- US-B1- 6 209 527
- PATENT ABSTRACTS OF JAPAN Bd. 2000, Nr. 01, 31. Januar 2000 (2000-01-31) & JP 11 280930 A (DENSO CORP), 15. Oktober 1999 (1999-10-15)
- PATENT ABSTRACTS OF JAPAN Bd. 1996, Nr. 08, 30. August 1996 (1996-08-30) & JP 08 100727 A (TOYOTA MOTOR CORP), 16. April 1996 (1996-04-16)

## Beschreibung

Die Erfindung betrifft eine Vorrichtung zum Steuern eines Druckes in einer Kraftstoff-Vorlaufleitung eines Kraftfahrzeuges mit einem zur Verbindung mit der Vorlaufleitung vorgesehenen Einströmanschluss und mit einem zur Rückführung von Kraftstoff in einen Kraftstoffbehälter vorgesehenen Ausströmanschluss und mit einem in einer Verbindung des Einströmanschlusses mit dem Ausströmanschluss angeordneten Ventil.

Zur Begrenzung eines in einer Vorlaufleitung vorgesehenen Druckes sind Druckbegrenzungsventile bekannt geworden, welche oberhalb eines vorgesehenen Druckes öffnen und überschüssigen Kraftstoff in den Kraftstoffbehälter zurückführen. Damit wird der Maximaldruck, welcher der Brennkraftmaschine zugeführt wird, begrenzt.

Bei heutigen Kraftfahrzeugen stellt sich jedoch das Problem, dass nach Abschalten der Brennkraftmaschine Kraftstoff aus einer Einspritzdüse der Brennkraftmaschine austreten kann. Dieser Kraftstoff kann wegen eines im Kraftstoffbehälter angeordneten Rückschlagventils nicht in den Kraftstoffbehälter zurückströmen. Insbesondere wenn die Brennkraftmaschine bei kalter Witterung abgestellt wird, steigt mit steigender Temperatur der Druck in der Vorlaufleitung, und Kraftstoff tritt an der Einspritzdüse aus. Der Druck in der Vorlaufleitung kann dabei von 0 bar bis zu 3 bar ansteigen. Dies ist insbesondere bei künftigen Kraftfahrzeugen ohne Schadstoffausstoß - so genannte zero emmission vehicle - nicht mehr tragbar.

Aus der JP 11280930 oder der JP 08100727 ist eine Vorrichtung zum Steuern eines Drucks in einen Kraftstoffsystem bekannt.

Der Erfindung liegt das Problem zugrunde, eine Vorrichtung der Eingangs genannten Art so zu gestalten, dass sie ein Austreten von Kraftstoff an der abgeschalteten Brennkraftmaschine weitgehend verhindert.

Dieses Problem wird erfindungsgemäß gelöst durch ein Druckbegrenzungsventil, welches die Verbindung des Einströmanschlusses mit dem Ausströmanschluss unterhalb eines vorgesehenen ersten Druckes verschließt und eine Strömung durch die Verbindung oberhalb des ersten Druckes drosselt, und ein Absperrventil, welches die Verbindung des Einströmanschlusses mit dem Ausströmanschluss oberhalb eines zweiten Druckes verschließt, wobei der erste Druck kleiner ist als der zweite Druck.

Durch diese Gestaltung ist die Verbindung zwischen der Vorlaufleitung unterhalb des ersten Druckes und oberhalb des zweiten Druckes verschlossen. Zwischen dem ersten Druck und dem zweiten Druck vermag Kraftstoff aus der Vorlaufleitung in den Kraftstoffbehälter abgeführt zu werden, und damit bei abgeschalteter Brennkraftmaschine ein Ansteigen des Druckes in der Vorlaufleitung durch Temperatureinflüsse zu vermeiden. Hierdurch wird zuverlässig verhindert, dass Kraftstoff bei abgeschalteter Brennkraftmaschine aus der Einspritzdüse austreten kann. Durch das Schließen der Verbindung unterhalb des ersten Druckes wird sichergestellt, dass die Vorlaufleitung bei abgeschalteter Brennkraftmaschine mit Kraftstoff befüllt bleibt und ein problemloser Neustart der Brennkraftmaschine möglich ist. Das Schließen der Verbindung oberhalb des zweiten Druckes ermöglicht den normalen Betrieb der Brennkraftmaschine mit dem von der Fördereinheit im Kraftstoffbehälter zur Verfügung gestellten Druck. Die Drosselung der Strömung in der Verbindung zwischen dem ersten Druck und dem zweiten Druck hat den Sinn, dass der zweite Druck bei einem Betrieb der Fördereinheit mit einer vorgesehenen Förderleistung auch erreicht wird.

Die erfindungsgemäße Vorrichtung erfordert einen besonders geringen Montageaufwand, wenn das Absperrventil und das Druckbegrenzungsventil als bauliche Einheit ausgebildet sind.

Die erfindungsgemäße Vorrichtung lässt sich einfach für vorgesehene Drücke zusammenstellen, wenn das Absperrventil und das Druckbegrenzungsventil in Strömungsrichtung der Strömung des Kraftstoffs von dem Einströmanschluss zu dem Ausströmanschluss hintereinander angeordnet sind.

Die erfindungsgemäße Vorrichtung erfordert nur eine besonders geringe Anzahl von Bauteilen, wenn der Einströmanschluss und der Ausströmanschluss jeweils einen Ventilsitz aufweisen und ein einzelner, zwischen den beiden Ventilsitzen beweglicher Ventilkörper gegen den Ventilsitz des Einströmanschlusses vorgespannt ist.

Zur weiteren Vereinfachung der Einstellung der vorgesehenen Drücke trägt es gemäß einer anderen vorteilhaften Weiterbildung der Erfindung bei, wenn das Druckbegrenzungsventil und das Absperrventil jeweils ein Federelement und einen gegen einen Ventilsitz vorgespannten Ventilkörper haben.

Die Vorrichtung ermöglicht es, mit besonders geringem baulichen Aufwand beispielsweise eine Saugstrahlpumpe im Kraftstoffbehälter zu versorgen, wenn die Verbindung zwischen dem Ventilsitz des Druckbegrenzungsventils und dem Ventilsitz des Absperrventils einen Anschluss für einen weiteren Verbraucher von Kraftstoff aufweist.

Eine Drosselung der Strömung zwischen den beiden vorgesehenen Drücken erfordert gemäß einer anderen vorteilhaften Weiterbildung der Erfindung einen besonders geringen baulichen Aufwand, wenn der einzelne, zwischen den Ventilsitzen bewegliche Ventilkörper und eine den Ventilkörper zwischen den Ventilsitzen führende Wandung unterschiedliche Querschnitte aufweisen. Hierdurch steht der Ventilkörper in der Strömung und wird mit steigendem Volumenstrom gegen den Ventilsitz des Absperrventils gedrückt.

Eine zuverlässige Abführung von Kraftstoff bei abgeschalteter Brennkraftmaschine lässt sich auch bei starken Temperaturschwankungen sicherstellen, wenn die Verbindung zwischen den beiden Ventilsitzen einen Kanal zur Umströmung des einzelnen Ventilkörpers zwischen dem ersten Druck und dem zweiten Druck aufweist. Dieser Kanal wird vorzugsweise von zumindest einem den Ventilkörper führenden Steg gebildet. Die Stege können dabei sternförmig um den radialen Umfang des Ventilkörpers herum gruppiert werden.

Die erfindungsgemäße Vorrichtung gestaltet sich konstruktiv besonders einfach, wenn der Ventilkörper eine ebene, aus weichem Material gefertigte Scheibe und daran angeordnete Stützscheiben aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen Kraftstoffbehälter mit einer erfindungsgemäßen Vorrichtung und einer Brennkraftmaschine,
- Fig. 2: schematisch eine erste Ausführungsform der erfindungsgemäßen Vorrichtung aus Figur 1,
- Fig. 3: schematisch eine zweite Ausführungsform der erfindungsgemäßen Vorrichtung aus Figur 2.

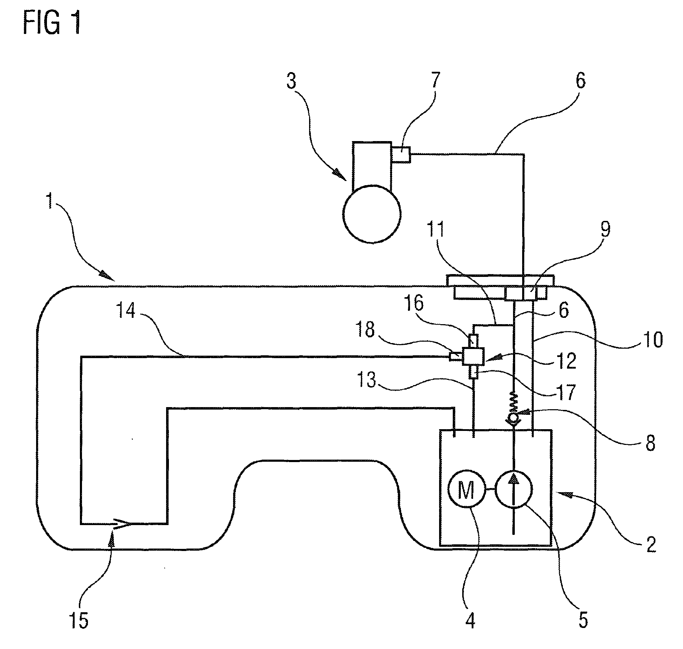

Figur 1 zeigt schematisch einen Kraftstoffbehälter 1 eines Kraftfahrzeuges mit einer darin angeordneten Fördereinheit 2 zur Förderung von Kraftstoff zu einer Brennkraftmaschine 3. Die Fördereinheit 2 hat eine von einem Elektromotor 4 angetriebene Kraftstoffpumpe 5 und ist über eine Vorlaufleitung 6 mit einer Einspritzleiste 7 der Brennkraftmaschine 3 verbunden. In der Vorlaufleitung 6 sind ein Rückschlagventil 8 und ein Druckbegrenzungsventil 9 angeordnet. Das Rückschlagventil 8 verhindert ein Leerlaufen der Vorlaufleitung 6 bei abgestellter Brennkraftmaschine 3, während das Druckbegrenzungsventil 9 oberhalb eines vorgesehenen Druckes öffnet und überschüssigen Kraftstoff über eine Rücklaufleitung 10 zu der Fördereinheit 2 zurückführt.

Weiterhin ist die Vorlaufleitung 6 über eine erste Kraftstoffleitung 11 mit einer Vorrichtung 12 zum Steuern eines Druckes in der Vorlaufleitung 6 verbunden. Eine zweite Kraftstoffleitung 13 verbindet die Vorrichtung 12 mit der Fördereinheit 2. Eine dritte, an der Vorrichtung 12 angeschlossene Kraftstoffleitung 14 führt zu einer Saugstrahlpumpe 15, welche Kraftstoff zu der Fördereinheit 2 fördert. Ein Einströmanschluss 16 der Vorrichtung 12 ist mit der zu der Vorlaufleitung 6 führenden Kraftstoffleitung 11 verbunden. Die Vorrichtung 12 hat einen Ausströmanschluss 17 zum Anschluss der in die Fördereinheit 2 geführten Kraftstoffleitung 13 und einen dritten Anschluss 18 zum Anschluss der zu der Saugstrahlpumpe 15 führenden Kraftstoffleitung 14.

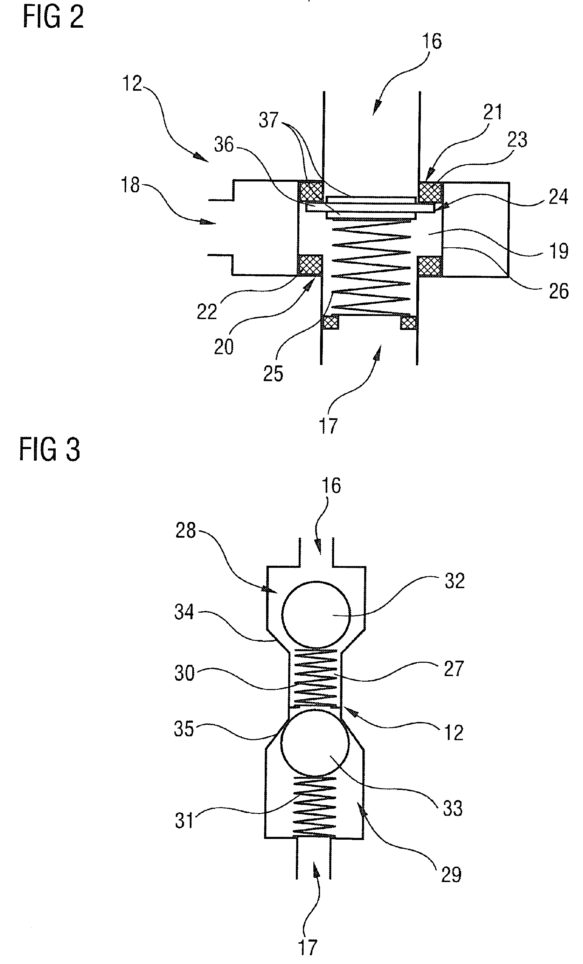

Figur 2 zeigt schematisch eine erste Ausführungsform der Vorrichtung 12 aus Figur 1, bei der in einer Verbindung 19 zwischen dem Einströmanschluss 16 und dem Ausströmanschluss 17 ein Absperrventil 20 und ein Druckbegrenzungsventil 21 hintereinander angeordnet sind. Das Absperrventil 20 und das Druckbegrenzungsventil 21 weisen jeweils einen Ventilsitz 22, 23 auf, wobei die Ventilsitze 22, 23 einander gegenüberstehen und zwischen den Ventilsitzen 22, 23 ein Ventilkörper 24 beweglich angeordnet ist. Der Ventilkörper 24 ist in dem dargestellten, drucklosen Zustand von einem Federelement 25 gegen den Ventilsitz 23 des Druckbegrenzungsventils 21 vorgespannt. Zwischen dem Druckbegrenzungsventil 21 und dem Absperrventil 20 ist der Anschluss 18 der zu der Saugstrahlpumpe 15 führenden Kraftstoffleitung 14 aus Figur 1 angeordnet. Weiterhin hat die Vorrichtung 12 zwischen den Ventilsitzen 22, 23 angeordnete Stege 26 zur Führung des Ventilkörpers 24. Der Ventilkörper 24 hat eine Scheibe 36 aus gummielastischem Material und zwei aus Metall gefertigte Stützscheiben 37.

Bei einem Stillstand der in Figur 1 dargestellten Fördereinheit 2 ist die Vorlaufleitung 6 mit Kraftstoff befüllt. Wenn bei steigender Temperatur der Druck in der Vorlaufleitung 6 ansteigt, wird der Ventilkörper 24 von dem Ventilsitz 23 des Druckbegrenzungsventils 21 weggedrückt, und Kraftstoff kann von dem Einströmanschluss 16 zu dem Ausströmanschluss 17 überströmen. Damit wird der Druck in der Vorlaufleitung 6 begrenzt und verhindert, dass bei abgeschalteter Brennkraftmaschine 3 an der in Figur 1 dargestellten Einspritzleiste 7 Kraftstoff austritt. Bei einem Betrieb der Fördereinheit 2 wird bei hohem Druck ein hoher Volumenstrom gefördert. Der hohe Druck und der hohe Volumenstrom bewirken, dass der Ventilkörper 24 durch die Kraft des Federelementes 25 gegen den Ventilsitz 22 des Absperrventils 20 gedrückt wird und den Ausströmanschluss 17 verschließt. Gleichzeitig kann Kraftstoff über den dritten Anschluss 18 zu der in Figur 1 dargestellten Saugstrahlpumpe 15 strömen. Der Druck in der Vorlaufleitung 6 wird anschließend von dem in Figur 1 dargestellten Druckbegrenzungsventil 9 und der Förderleistung der Kraftstoffpumpe 5 bestimmt.

Figur 3 zeigt schematisch eine zweite Ausführungsform der Vorrichtung 12 aus Figur 1 im drucklosen Zustand, bei der in einer Verbindung 27 zwischen dem Einströmanschluss 16 und dem Ausströmanschluss 17 ein Absperrventil 28 und ein Druckbegrenzungsventil 29 hintereinander angeordnet sind, wobei das Absperrventil 28 näher an dem Einströmanschluss 16 angeordnet ist als das Druckbegrenzungsventil 29. Das Absperrventil 28 und das Druckbegrenzungsventil 29 weisen jeweils einen von einem Federelement 30, 31 vorgespannten Ventilkörper 32, 33 und einen Ventilsitz 34, 35 auf. Diese Vorrichtung 12 hat abweichend von der aus Figur 2 keinen Anschluss für die zu der Saugstrahlpumpe 15 führende Kraftstoffleitung 14. Die Steuerung der Strömung von dem Einströmanschluss 16 zu dem Ausströmanschluss 17 geschieht jedoch wie zu der Vorrichtung 12 nach Figur 2 beschrieben.

## Patentansprüche

1. Vorrichtung zum Steuern eines Druckes in einer Kraftstoff-Vorlaufleitung eines Kraftfahrzeuges mit einem zur Verbindung mit der Vorlaufleitung (6) vorgesehenen Einströmanschluss (16) und mit einem Ausströmanschluss (17) und mit einem in einer Verbindung des Einströmanschlusses (16) mit dem Ausströmanschluss (17) angeordneten Ventil, mit einem Druckbegrenzungsventil (21, 29), welches die Verbindung (19, 27) des Einströmanschlusses (16) mit dem Ausströmanschluss (17) unterhalb eines vorgesehenen ersten Drucks verschließt und einem Absperrventil (20, 28), welches die Verbindung (19, 27) des Einströmanschlusses (16) mit dem Ausströmanschluss (17) oberhalb eines zweiten Druckes verschließt, wobei der erste Druck kleiner ist als der zweite Druck, **dadurch gekennzeichnet, dass** das Druckbegrenzungsventil (21, 29) eine Strömung durch die Verbindung oberhalb des ersten Drucks drosselt und dass der Ausströmanschluss (17) zur Rückführung von Kraftstoff in einen Kraftstoffbehälter vorgesehenen ist.

2. Vorrichtung nach Anspruch 1, **gekennzeichnet durch,** dass das Absperrventil (20, 28) und das Druckbegrenzungsventil (21, 29) als bauliche Einheit ausgebildet sind.

3. Vorrichtung nach Anspruch 1 oder 2, **gekennzeichnet durch,** dass das Absperrventil (20, 28) und das Druckbegrenzungsventil (21, 29) in Strömungsrichtung der Strömung des Kraftstoffs von dem Einströmanschluss (16) zu dem Ausströmanschluss (17) hintereinander angeordnet sind.

4. Vorrichtung nach zumindest einem der vorhergehenden Ansprüche, **gekennzeichnet durch,** dass der Einströmanschluss (16) und der Ausströmanschluss (17) jeweils einen Ventilsitz (22, 23) aufweisen und ein einzelner, zwischen den beiden Ventilsitzen (22, 23) beweglicher Ventilkörper (24) gegen den Ventilsitz (22) des Einströmanschlusses (16) vorgespannt ist.

5. Vorrichtung nach zumindest einem der vorhergehenden Ansprüche, **gekennzeichnet durch,** dass das Druckbegrenzungsventil (29) und das Absperrventil (28) jeweils ein Federelement (30, 31) und einen gegen einen Ventilsitz (34, 35) vorgespannten Ventilkörper (32, 33) haben.

6. Vorrichtung nach zumindest einem der vorhergehenden Ansprüche, **gekennzeichnet durch,** dass die Verbindung (19) zwischen dem Ventilsitz (23) des Druckbegrenzungsventils (21) und dem Ventilsitz (22) des Absperrventils (20) einen Anschluss (18) für einen weiteren Verbraucher von Kraftstoff aufweist.

7. Vorrichtung nach Anspruch 4 , **gekennzeichnet durch,** dass der einzelne, zwischen den Ventilsitzen (22, 23) bewegliche Ventilkörper (24) und eine den Ventilkörper (24) zwischen den Ventilsitzen (22, 23) führende Wandung unterschiedliche Querschnitte aufweisen.

8. Vorrichtung nach einen der Ansprüche 4 oder 7 , **gekennzeichnet durch,** dass die Verbindung (19) zwischen den beiden Ventilsitzen (22, 23) einen Kanal zur Umströmung des einzelnen Ventilkörpers (24) zwischen dem ersten Druck und dem zweiten Druck aufweist.

9. Vorrichtung nach einen der Ansprüche 4, 7 oder 8 , **gekennzeichnet durch,** dass der Ventilkörper (24) eine ebene, aus weichem Material gefertigte Scheibe (36) und daran angeordnete Stützscheiben (37) aufweist.

## Claims

1. Apparatus for controlling a pressure in a fuel inflow line of a motor vehicle, having an inflow junction (16) and having an outflow junction (17) which is provided for connecting to the inflow line (6), and having a valve which is arranged in a connection between the inflow junction (16) and the outflow junction (17), having a pressure limiting valve (21, 29) which closes the connection (19, 27) between the inflow junction (16) and the outflow junction (17) below a predefined first pressure and a shutoff valve (20, 28) which closes the connection (19, 27) between the inflow junction (16) and the outflow junction (17) above a second pressure, the first pressure being smaller than the second pressure, **characterized in that** the pressure limiting valve (21, 29) throttles flow through the connection above the first pressure and that the outflow junction (17) is provided for returning fuel into a fuel container.

2. Apparatus according to Claim 1, **characterized in that** the shutoff valve (20, 28) and the pressure limiting valve (21, 29) are configured as one structural unit.

3. Apparatus according to Claim 1 or 2, **characterized in that** the shutoff valve (20, 28) and the pressure limiting valve (21, 29) are arranged behind one another in the direction of flow of the fuel from the inflow junction (16) to the outflow junction (17).

4. Apparatus according to at least one of the preceding claims, **characterized in that** the inflow junction (16) and the outflow junction (17) each have a valve seat (22, 23) and a single valve body (24) which can move between the two valve seats (22, 23) is prestressed against the valve seat (22) of the inflow junction (16).

5. Apparatus according to at least one of the preceding claims, **characterized in that** the pressure limiting valve (29) and the shutoff valve (28) each have a spring element (30, 31) and a valve body (32, 33) which is prestressed against a valve seat (34, 35).

6. Apparatus according to at least one of the preceding claims, **characterized in that** the connection (19) between the valve seat (23) of the pressure limiting valve (21) and the valve seat (22) of the shutoff valve (20) has a junction (18) for a further consumer of fuel.

7. Apparatus according to Claim 4, **characterized in that** the single valve body (24) which can move between the valve seats (22, 23) and a wall which guides the valve body (24) between the valve seats (22, 23) have different cross sections.

8. Apparatus according to one of Claims 4 or 7, **characterized in that** the connection (19) between the two valve seats (22, 23) has a duct for flow around the single valve body (24) between the first pressure and the second pressure.

9. Apparatus according to one of Claims 4, 7 or 8, **characterized in that** the valve body (24) has a flat disk (36), which is made from soft material, and supporting disks (37) arranged on the former.

## Revendications

1. Dispositif permettant de commander une pression dans une conduite d'alimentation en carburant de véhicule automobile, comportant un raccordement d'arrivée (16) prévu pour être raccordé à la conduite d'alimentation (6) et un raccordement de départ (17) et une soupape placée dans une liaison entre le raccordement d'arrivée (16) et le raccordement de départ (17), une soupape de limitation de pression (21, 29), qui obture la liaison (19, 27) entre le raccordement d'arrivée (16) et le raccordement de départ (17), lorsque la pression est inférieure à une première pression donnée, et une soupape de fermeture (20, 28), qui obture la liaison (19, 27) entre le raccordement d'arrivée (16) et le raccordement de départ (17), lorsque la pression est supérieure à une deuxième pression donnée, la première pression étant inférieure à la deuxième pression, **caractérisé par le fait que** la soupape de limitation de pression (21, 29) réduit un écoulement à travers la liaison lorsque la pression est supérieure à la première pression et le raccordement de départ (17) est prévu pour refluer du carburant dans un réservoir à carburant.

2. Dispositif selon la revendication 1, **caractérisé par le fait que** la soupape de fermeture (20, 28) et la soupape de limitation de pression (21, 29) constituent une unité constructive unique.

3. Dispositif selon la revendication 1 ou 2, **caractérisé par le fait que** la soupape de fermeture (20, 28) et la soupape de limitation de pression (21, 29) sont placées l'une derrière l'autre dans la direction de l'écoulement de carburant entre le raccordement d'arrivée (16) et le raccordement de départ (17).

4. Dispositif selon au moins l'une des revendications précédentes, **caractérisé par le fait que** le raccordement d'arrivée (16) et le raccordement de départ (17) ont chacun un siège de soupape (22, 23) et qu'un corps de soupape séparé (24), qui est mobile entre les deux sièges de soupape (22, 23), est soumis à une force de précontrainte contre le siège de soupape (22) du raccordement d'arrivée (16) .

5. Dispositif selon au moins l'une des revendications précédentes, **caractérisé par le fait que** la soupape de limitation de pression (29) et la soupape de fermeture (28) ont chacune un organe à ressort (30, 31) et un corps de soupape (32, 33) soumis à une force de précontrainte contre un siège de soupape (34, 35).

6. Dispositif selon au moins l'une des revendications précédentes, **caractérisé par le fait que** la liaison (19) entre le siège (23) de la soupape de limitation de pression (21) et le siège (22) de la soupape de fermeture (20) a un branchement (18) pour un autre consommateur de carburant.

7. Dispositif selon la revendication 4, **caractérisé par le fait que** le corps de soupape séparé (24), qui est mobile entre les deux sièges de soupape (22, 23), et une paroi guidant le corps de soupape (24) entre les sièges de soupape (22, 23) ont des sections transversales différentes.

8. Dispositif selon l'une des revendications 4 ou 7, **caractérisé par le fait que** la liaison (19) entre les deux sièges de soupape (22, 23) comporte un canal destiné à faire dévier l'écoulement autour du corps de soupape séparé (24) entre la première pression et la deuxième pression.

9. Dispositif selon l'une des revendications 4, 7 ou 8, **caractérisé par le fait que** le corps de soupape (24) comporte un disque plat (36) fabriqué en matière molle et des disques de soutien (37) qui y sont fixés.
